# FASCICULE DE BREVET EUROPEEN

(11) **EP 1 888 406 B1**
(45) Date de publication et mention de la délivrance du brevet: **11.03.2009**
(21) Numéro de dépôt: 06764737.0
(22) Date de dépôt: 06.06.2006
(51) Int. Cl.: B64D 11/06, B64D 11/00

(54) **AMENAGEMENT DE SIEGES ET COFFRES A BAGAGES DANS UNE CABINE D'AERONEF**
AUSSTATTUNG EINER FLUGZEUGKABINE MIT SITZEN UND GEPÄCKFÄCHERN
FITTING OUT AN AIRCRAFT CABIN WITH SEATS AND BAGGAGE COMPARTMENTS

(30) Priorité: 07.06.2005 FR 0505758
(43) Date de publication de la demande: 20.02.2008
(73) Titulaire: Airbus, 31700 Blagnac Cédex (FR)
(72) Inventeur: SAINT-JALMES, Bruno, F-31400 Toulouse (FR); REZAG, André, F-31200 Toulouse (FR); ZANEBONI, Jason, F-31700 Blagnac (FR)
(74) Mandataire: Hartmann, Jean-Luc
(86) Numéro de dépôt international: PCT/FR2006/001272
(87) Numéro de publication internationale: WO 2006/131635

(56) Documents cités:
- FR-A- 2 843 730
- US-A- 4 951 560
- US-A- 5 716 026

## Description

La présente invention concerne un aménagement de sièges et de coffres à bagages dans une cabine d'aéronef, tel par exemple un avion.

L'invention concerne plus particulièrement, mais non exclusivement, l'aménagement intérieur d'avions exploités commercialement par des compagnies aériennes pour le transport de passagers sur des lignes aériennes régulières ou des liaisons charter. Dans de tels avions, se pose toujours le problème de loger à la fois un grand nombre de passagers tout en accordant à ceux-ci le meilleur confort possible.

De manière habituelle, les sièges, dans un avion de ligne ou similaire, sont disposés en colonnes et rangées et sont tous orientés dans le même sens. Pour accéder aux sièges, selon la largeur de la cabine et le nombre de sièges disposés de front dans une même rangée, un à trois couloirs longitudinaux sont généralement prévus.

Pour le rangement des bagages, des coffres à bagages sont prévus dans la partie supérieure de la cabine. Ces coffres à bagages sont alignés longitudinalement au-dessus des sièges. Ces coffres à bagages s'étendent sur sensiblement toute la longueur de la cabine de l'aéronef ou d'un tronçon de cabine disposé entre deux portes de secours successives. Ces coffres à bagages sont généralement accessibles depuis les couloirs. Pour accéder à un coffre à bagages, un passager se place en position debout face à ce coffre à bagages. Il est alors tourné vers l'une des parois longitudinale de la cabine de l'aéronef, transversalement par rapport à cet aéronef.

Une telle configuration de l'art antérieur présente plusieurs inconvénients. Un premier inconvénient est par exemple que l'espace destiné au rangement des bagages est relativement limité. De ce fait, chaque passager ne peut emporter avec lui en cabine un voyage de la taille maximale autorisée actuellement. On compte ici sur le fait que statistiquement chaque passager emporte avec lui en cabine un volume de bagage inférieur au volume maximal autorisé.

Un autre inconvénient est que les coffres à bagages se trouvent au-dessus des sièges et sont disposés parallèlement au couloir de telle sorte que lorsqu'un passager se lève, il risque de se cogner la tête dans le coffre à bagages situé au-dessus de lui.

Un autre inconvénient est que les passagers rangent leurs bagages alors qu'ils sont debout dans le couloir d'accès aux sièges. Ainsi, durant l'embarquement notamment, les passagers chargeant leurs bagages dans les coffres à bagages gênent la circulation des autres passagers qui veulent accéder à leur place.

Le fait d'avoir des colonnes de coffres à bagages s'étendant longitudinalement parallèlement au(x) couloir(s) est aussi esthétiquement peu agréable car les coffres à bagages accentuent l'effet de perspective donné par le(s) couloir(s).

Enfin les systèmes de ventilation actuels dans les aéronefs ne permettent pas une bonne circulation de l'air. Ceci est bien entendu nuisible au bon confort des passagers.

La présente invention a alors pour but de fournir un aménagement intérieur d'aéronef dans lequel, sans limiter le confort du passager, l'espace pour les bagages est augmenté. De préférence, cet aménagement favorisera un embarquement plus fluide des passagers. Il sera avantageusement également d'une esthétique originale et agréable et enfin permettra une bonne circulation de l'air dans la cabine.

À cet effet, l'invention propose un tronçon de cabine d'aéronef comportant :
- au moins un couloir s'étendant longitudinalement,
- des sièges disposés en rangées transversales par rapport au couloir longitudinal,
- au moins un ensemble de coffres à bagages alignés et placés en hauteur.

Selon la présente invention, les coffres à bagages sont alignés selon une direction transversale et placés au-dessus de sièges.

Dans une telle configuration, les coffres à bagages sont disposés au-dessus de sièges, c'est-à-dire à un endroit où les passagers sont assis, éventuellement allongés mais pas debout. De ce fait, l'espace disponible est relativement important car il n'est pas nécessaire de prévoir de pouvoir passer sous le coffre à bagages, comme c'est le cas dans les cabines de l'art antérieur. De plus, compte tenu de l'orientation des alignements de coffres à bagages, l'accès à ces coffres se fait plus naturellement en étant debout devant un siège que debout dans un couloir longitudinal traversant la cabine. Les passagers plaçant leurs bagages dans le coffre à bagages et les en retirant ne gênent donc pas la circulation des autres passagers dans le(s) couloir(s) longitudinal(aux).

Dans un tronçon de cabine d'aéronef selon l'invention, les coffres à bagages sont placés de préférence au-dessus des dossiers des sièges de manière à ne pas risquer de gêner les passagers lorsqu'ils s'assoient ou se lèvent.

Dans un tel tronçon de cabine d'aéronef, l'alignement de coffres à bagages est avantageusement interrompu au-dessus d'un couloir longitudinal de manière à ne pas gêner la circulation des passagers et du personnel navigant dans ce couloir.

Une configuration préférée d'un tronçon selon l'invention prévoit que chaque siège de ce tronçon comporte une assise et un dossier, et que les sièges de deux rangées successives sont disposés alternativement face à face ou bien dos à dos. De cette manière, deux rangées de coffres à bagages peuvent être accolées l'une à l'autre. Visuellement, ceci permet de limiter le nombre de séparations transversales en hauteur. Ceci permet également d'alléger la structure en utilisant des éléments en commun pour les deux rangées de coffres accolées.

De manière à permettre une circulation d'air entre deux rangées (non accolées l'une à l'autre) successives de coffres à bagages, les coffres à bagages sont avantageusement carénés de manière à supprimer d'éventuelles arêtes vives transversales dues à la présence des coffres à bagages.

Une variante de réalisation de l'invention prévoit que chaque coffre à bagages comporte un caisson fixé sur le plafond du tronçon de cabine d'aéronef ainsi qu'un tiroir mobile entre une position fermée dans laquelle le tiroir est logé dans le caisson et une position ouverte dans laquelle le tiroir fait saillie hors du caisson, le caisson et le tiroir présentant des parois disposées de telle sorte que des objets disposés dans le tiroir sont inaccessibles depuis l'extérieur du coffre à bagages lorsque le tiroir est en position fermée et accessibles par une ouverture lorsque le tiroir est en position ouverte. Dans cette variante de réalisation, le tiroir passe de sa position ouverte à sa position fermée par exemple par un mouvement de translation sensiblement verticale.

Pour son aération, un tronçon de cabine selon l'invention comporte par exemple des conduits d'air s'étendant longitudinalement au-dessus des coffres à bagages, ainsi que des bouches d'aération disposées entre deux alignements de coffres à bagages, sensiblement à équidistance de ceux-ci.

La présente invention concerne également, d'une part une cabine d'aéronef et d'autre part un aéronef, comportant au moins un tronçon de cabine tel que décrit ci-dessus.

Des détails et avantages de la présente invention ressortiront mieux de la description qui suit, faite en référence aux dessins schématiques annexés, sur lesquels :
- la figure 1 est une vue en coupe partielle longitudinale d'un tronçon de cabine d'aéronef selon l'invention, et
- la figure 2 est une vue en coupe partielle transversale d'un tronçon de cabine d'aéronef selon l'invention.

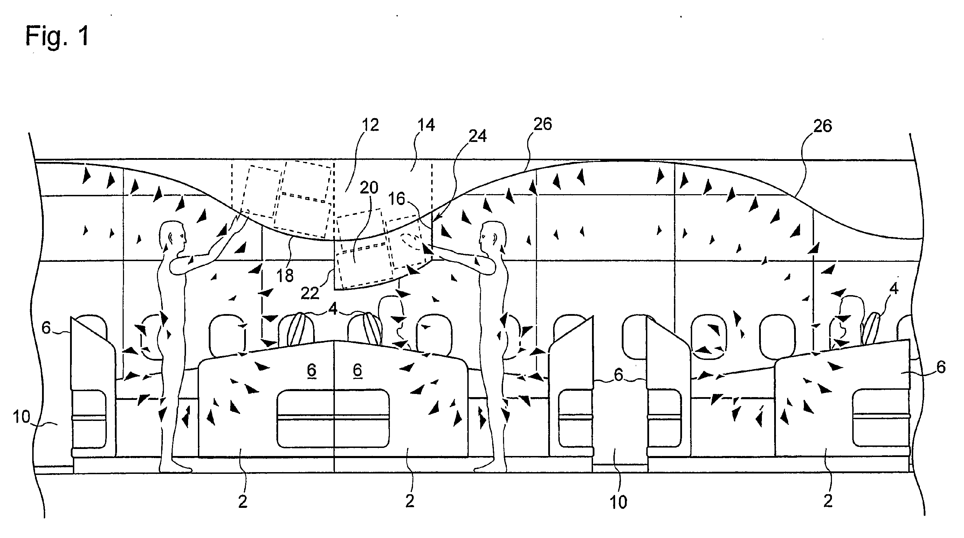

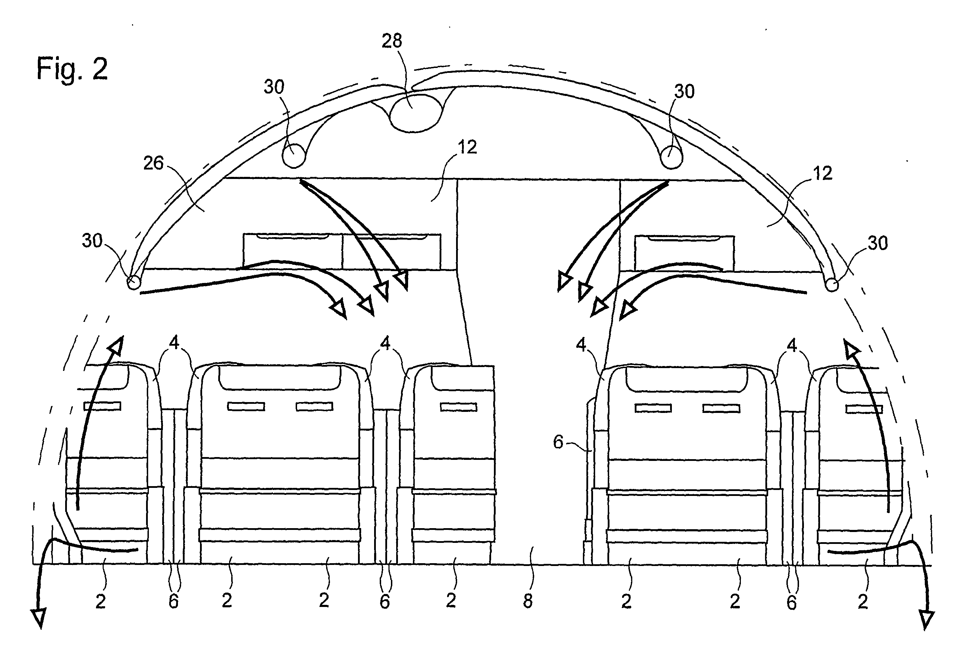

Les figures 1 et 2 représentent schématiquement l'intérieur d'un tronçon de cabine d'aéronef destiné à recevoir des passagers. L'aéronef considéré ici est un avion destiné au transport de passagers, tel par exemple un avion de la marque Airbus A 340.

Dans le tronçon de cabine représenté, des modules 2 destinés chacun à recevoir un passager sont disposés en rangées transversales et colonnes longitudinales. La figure 1 montre les modules d'une colonne longitudinale tandis que la figure 2 montre les modules d'une rangée transversale. Chaque module 2 comporte notamment un siège présentant une assise (non représentée) et un dossier 4 (dont seule une partie est visible sur les dessins) ainsi qu'une paroi 6 entourant chaque siège et délimitant un espace réservé pour chaque passager. Le siège est par exemple un siège convertible et divers accessoires peuvent être prévus dans le module (écran de télévision ou similaire, divers rangements, repose-jambes, etc).

Dans la configuration représentée, un seul couloir 8 longitudinal permet l'accès aux modules 2. Des passages d'accès 10 relient les modules 2 d'une même rangée transversale au couloir 8 unique. Dans la forme de réalisation représentée sur les dessins, sept modules 2 sont disposés de front dans la cabine, quatre d'un premier côté du couloir 8 et trois de l'autre. Chaque rangée transversale comporte donc sept modules 2 et peut recevoir autant de passagers.

On remarque également sur les figures que l'orientation des sièges de deux rangées successives est inversée. Ainsi deux sièges voisins d'une même colonne sont disposés soit dos-à-dos soit en vis-à-vis. Cette disposition alternée de l'orientation des sièges d'une rangée est avantageuse dans le cadre de l'invention, comme cela ressort de la suite de la présente description.

Cette configuration est similaire à celle représentée sur la figure 6 du document FR-2 843 730. Toutefois, la présente invention peut s'appliquer à d'autres configurations de cabines, avec un seul couloir longitudinal -représentées ou non dans le document FR-2 843 730- ou bien avec plusieurs couloirs longitudinaux. De même, la présente invention peut s'appliquer à des tronçons de cabine dans lesquels chacun des sièges est disposé au sein d'un module ou bien à des configurations plus courantes dans lesquelles les sièges sont disposés les uns à côté des autres sans séparation.

Des coffres à bagages 12 sont prévus pour loger les bagages des passagers voyageant dans le tronçon de cabine représenté. Ces coffres à bagages 12 sont disposés au plafond de la cabine. Ils sont disposés en rangées transversales. Ces rangées de coffres à bagages 12 sont disposées au-dessus des sièges des passagers, et plus précisément au-dessus des dossiers 4 de ces sièges. Il n'y a pas de coffre à bagages au niveau du couloir 8 longitudinal. Dans cette forme de réalisation préférée, les coffres à bagages 12 se trouvent donc exclusivement au-dessus de sièges.

Chaque coffre à bagages 12 est, dans une forme de réalisation préférée représentée sur les dessins, formé d'un caisson 14 et d'un tiroir 16. Bien entendu, des coffres à bagages classiques, c'est-à-dire tels que connus de l'art antérieur, peuvent également être utilisés ici. Le caisson 14 est une structure fixée au plafond de la cabine et destinée à former un logement pour le tiroir 16 correspondant. Le caisson 14 et le tiroir 16 présentent des moyens permettant au tiroir 16 de se déplacer verticalement entre une position ouverte descendue et une position fermée relevée. Une cinématique aussi simple est inhabituelle pour un coffre à bagages. Elle permet l'utilisation d'éléments mécaniques simples et de grande fiabilité.

Les tiroirs 16 comportent chacun une paroi inférieure 18 de laquelle s'étendent verticalement deux parois latérales 20 et une paroi de fond 22 reliant les deux parois latérales 20. La paroi inférieure 18 est avantageusement inclinée par rapport à l'horizontale de manière à entraîner les bagages déposés dans le tiroir vers la paroi de fond 22. En position fermée du tiroir 16, c'est-à-dire lorsque ce tiroir 16 est logé dans son caisson 14, seule la face extérieure de la paroi inférieure 18 est visible depuis la cabine. En position ouverte du tiroir 16, les parois latérales 20 et la paroi de fond 22 font saillie dans la cabine et une ouverture 24, à l'opposé de la paroi de fond 22, permettent d'introduire des bagages dans le tiroir, ou de les en retirer.

La course de chaque tiroir 16 est réglée de telle sorte que lorsque le tiroir 16 considéré est en position basse, il ne vienne pas heurter la tête d'un passager assis sur un siège se trouvant sous le tiroir 16. En position fermée du tiroir 16, la paroi inférieure de celui-ci se confond avec la forme du carénage 26.

La figure 1 illustre le chargement (ou déchargement) d'un coffre à bagages 12. Un passager, debout devant son siège, peut ouvrir un coffre à bagages sans risquer de heurter un passager assis. Comme on peut le voir sur la figure 2, il n'y a pas forcément un coffre à bagages par siège. Cette figure illustre le cas de trois coffres à bagages pour sept sièges. Toutefois, les coffres à bagages 12 décrits peuvent être des coffres de très grande capacité. L'exemple illustré comporte des tiroirs 16 qui peuvent chacun accueillir trois bagages de la taille maximale autorisée actuellement en cabine. Il y a donc dans cet exemple suffisamment de rangement pour accueillir neuf bagages alors qu'il n'y a que sept passagers. Ceci est un progrès sensible par rapport à la plupart des avions actuels pour lesquels il n'y a généralement pas assez de place de rangement pour recevoir un bagage de taille maximale par passager. Les tiroirs 16, une fois chargés, peuvent être lourds. Pour faciliter leur manoeuvre, des vérins pneumatiques (ou autres) peuvent être prévus. On peut aussi envisager une commande électrique des tiroirs 16. Dans ce cas, un moteur électrique est utilisé pour réaliser l'ouverture et la fermeture du tiroir 16 du coffre à bagages 12.

Les caissons 14, et donc aussi les coffres à bagages 12, sont carénés pour favoriser la circulation d'air dans le tronçon de cabine considéré. Au-dessus des sièges et des passages d'accès 10, le carénage 26 présente la forme d'une sinusoïde aplatie. Les parties basses du carénage 26 englobent les coffres à bagages 12 et se trouvent au-dessus des dossiers 4 de sièges tandis que les parties hautes du carénage 26 sont situées au-dessus des passages d'accès 10.

Sur les figures 1 et 2 des flèches illustrent la circulation d'air dans un tronçon de cabine avec un carénage 26 tel que décrit plus haut. Des bouches d'aération sont disposées ici sensiblement au niveau des passages d'accès 10, c'est-à-dire sensiblement à équidistance de deux rangées transversales voisines de coffres à bagages 12. Le carénage 26 guide alors l'air sortant de ces bouches (non représentées) vers les passagers assis sur les sièges. La figure 2 montre également le mouvement d'air dans un plan transversal. Comme on peut le remarquer sur les dessins, la présence du carénage 26 permet la création de vortex qui garantissent une bonne circulation de l'air. Une telle circulation d'air n'existe pas sur les avions de l'art antérieur sur lesquels aucune "barrière" transversale ne permet de créer une circulation d'air comparable.

La configuration d'un tronçon de cabine décrite ci-dessus présente plusieurs avantages. Tout d'abord, les coffres à bagages ne se trouvent qu'à des endroits destinés à recevoir des passagers en position assise ou éventuellement allongée mais pas en position debout. La circulation des passagers dans la cabine est donc favorisée.

La disposition des coffres à bagages en rangées transversales présente aussi des avantages esthétiques. Une cabine d'aéronef a une forme allongée et le fait de prévoir en hauteur des éléments disposés transversalement casse la perspective donnée par le(s) couloir(s) longitudinal(aux) pour un passager qui rentre dans la cabine. En outre, pour les passagers assis ou debout à proximité de leur siège, elle contribue à donner une impression de petit compartiment plus convivial qu'une grande salle.

Le carénage des coffres à bagages permet aussi de créer des mouvements d'air qui n'existent pas dans les cabines d'aéronefs de l'art antérieur. De tels mouvements d'air permettent une meilleure circulation d'air et un meilleur recyclage de celui-ci. Bien entendu, cette circulation d'air augmente le confort des passagers.

Cette circulation d'air peut être obtenue sans modifier les réseaux d'air actuels des avions. La figure 2 montre ainsi des conduits d'air longitudinaux qui sont similaires à ceux que l'on trouve sur les aéronefs de l'art antérieur. Dans l'exemple représenté sur la figure 2, on trouve ainsi sensiblement en position centrale un conduit d'air principal 28 de grand diamètre qui court tout le long de la cabine de l'aéronef. A partir de ce conduit d'air principal 28, des conduits secondaires 30, dérivés du conduit d'air principal 28, permettent d'injecter de l'air frais dans la cabine de l'aéronef. Ces conduits d'air secondaires 30 peuvent être de diamètres différents. A titre d'exemple non limitatif, la figure 2 représente de chaque côté du conduit d'air principal 28 un conduit secondaire de relativement grand diamètre (par exemple d'environ 100 mm de diamètre) et, plus éloigné du conduit d'air principal 28, un conduit secondaire 30 de diamètre moindre, par exemple d'environ 30 mm de diamètre.

Le fait, dans la configuration présentée, de disposer une rangée transversale de sièges dont les sièges sont orientés dans le sens de la marche alternativement avec une rangée transversale de sièges dont les sièges sont orientés dans le sens opposé à la marche permet d'accoler deux rangées transversales de coffres à bagages. Ceci permet d'alléger la structure des coffres à bagages en utilisant des éléments communs à deux rangées de coffres. Dans le cas où les coffres sont carénés, le carénage présentant une forme sensiblement sinusoïdale, en forme de vagues, la distance entre deux vagues successives peut être doublée par rapport à une configuration dans laquelle tous les sièges sont orientés dans le même sens avec une rangée simple de coffres à bagages au-dessus de chaque rangée de sièges.

Dans la forme de réalisation proposée, la capacité des coffres à bagages est importante et permet de proposer à chaque passager plus d'espace de rangement pour ses bagages à main que sur les avions de l'art antérieur.

Dans une configuration selon l'invention, l'accès aux coffres à bagages se fait normalement en étant debout devant un siège et non pas debout dans le couloir d'accès longitudinal. Ainsi, les passagers qui, avant de s'installer, disposent leurs bagages dans un coffre à bagages ne se trouvent pas dans le couloir et ne dérangent donc pas la circulation des autres passagers rejoignant leur siège. La circulation dans la cabine lors de l'embarquement et du débarquement des passagers est donc plus fluide et ces opérations d'embarquement et de débarquement peuvent être réalisées plus rapidement qu'avec une configuration classique de l'art antérieur.

La configuration proposée a également l'avantage de ne présenter aucun surcoût par rapport à une configuration "classique" de l'art antérieur, avec des sièges disposés en rangées et colonnes et des coffres à bagages alignés de part et d'autre des couloirs longitudinaux permettant l'accès aux sièges de la cabine. La mécanique simple proposée des coffres à bagages permet même de diminuer le prix de revient des coffres à bagages par rapport à des coffres conventionnels de l'art antérieur.

La présente invention ne se limite pas à la forme de réalisation préférée décrite ci-dessus à titre d'exemple non limitatif et aux variantes évoquées. Elle concerne également toutes les variantes de réalisation à la portée de l'homme du métier dans le cadre des revendications ci-après.

## Revendications

1. Tronçon de cabine d'aéronef comportant :
- au moins un couloir (8) s'étendant longitudinalement,
- des sièges disposés en rangées transversales par rapport au couloir (8) longitudinal,
- au moins un ensemble de coffres à bagages (12) alignés et placés en hauteur,
**caractérisé en ce que** les coffres à bagages (12) sont alignés selon une direction transversale et placés au-dessus de sièges, et **en ce que** des bouches d'aération sont disposées entre deux alignements de coffres à bagages (12).

2. Tronçon de cabine d'aéronef selon la revendication 1, **caractérisé en ce qu'**il comporte des conduits d'air (28, 30) s'étendant longitudinalement au-dessus des coffres à bagages, et **en ce que** des bouches d'aération sont disposées sensiblement à équidistance des deux alignements de coffres à bagages entre lesquels elles se situent.

3. Tronçon de cabine d'aéronef selon l'une des revendications 1 ou 2, **caractérisé en ce que** les coffres à bagages (12) sont carénés de manière à supprimer d'éventuelles arêtes vives transversales dues à la présence des coffres à bagages (12).

4. Tronçon de cabine d'aéronef selon l'une des revendications 1 à 3, **caractérisé en ce que** les coffres à bagages (12) sont placés au-dessus des dossiers (4) des sièges.

5. Tronçon de cabine d'aéronef selon l'une des revendications 1 à 4, **caractérisé en ce que** l'alignement de coffres à bagages (12) est interrompu au-dessus d'un couloir (8) longitudinal.

6. Tronçon de cabine d'aéronef selon l'une des revendications 1 à 5, **caractérisé en ce que** chaque siège comporte une assise et un dossier (4), et **en ce que** les sièges de deux rangées successives sont disposés alternativement face à face ou bien dos à dos.

7. Tronçon de cabine d'aéronef selon l'une des revendications 1 à 6, **caractérisé en ce que** chaque coffre à bagages (12) comporte un caisson (14) fixé sur le plafond du tronçon de cabine d'aéronef ainsi qu'un tiroir (16) mobile entre une position fermée dans laquelle le tiroir (16) est logé dans le caisson (14) et une position ouverte dans laquelle le tiroir (16) fait saillie hors du caisson (14), le caisson (14) et le tiroir (16) présentant des parois disposées de telle sorte que des objets disposés dans le tiroir sont inaccessibles depuis l'extérieur du coffre à bagages (12) lorsque le tiroir (16) est en position fermée et accessibles par une ouverture (24) lorsque le tiroir (16) est en position ouverte.

8. Tronçon de cabine d'aéronef selon la revendication 7, **caractérisé en ce que** le tiroir (16) passe de sa position ouverte à sa position fermée par un mouvement de translation sensiblement verticale.

9. Cabine d'aéronef, **caractérisée en ce qu'**elle comporte au moins un tronçon selon l'une des revendications 1 à 8.

10. Aéronef, **caractérisé en ce qu'**il comporte au moins un tronçon de cabine selon l'une des revendications 1 à 8.

## Claims

1. An aircraft cabin segment comprising:
- at least one longitudinally extending aisle (8),
- seats disposed in rows that are transverse to the longitudinal aisle (8),
- at least one set of luggage lockers (12) that are aligned and situated in a raised location,
**characterized in that** the luggage lockers (12) are aligned in a transverse direction and placed above seats, and **in that** ventilation openings are disposed between two alignments of luggage lockers (12).

2. An aircraft cabin segment according to claim 1, **characterized in that** it comprises air ducts (28, 30) extending longitudinally above the luggage lockers, and **in that** ventilation openings are disposed substantially equidistant from the two alignments of luggage lockers between which they are situated.

3. An aircraft cabin segment according to one of claims 1 or 2, **characterized in that** the luggage lockers (12) are profiled so as to eliminate possible transverse sharp edges due to the presence of the luggage lockers (12).

4. An aircraft cabin segment according to one of claims 1 to 3, **characterized in that** the luggage lockers (12) are placed above the back-rests (4) of the seats.

5. An aircraft cabin segment according to one of claims 1 to 4, **characterized in that** the alignment of the luggage lockers (12) is interrupted above a longitudinal aisle (8).

6. An aircraft cabin segment according to one of claims 1 to 5, **characterized in that** each seat comprises a seat-rest and a back-rest (4), and **in that** the seats of two successive rows are alternately disposed face to face or back to back.

7. An aircraft cabin segment according to one of claims 1 to 6, **characterized in that** each luggage locker (12) comprises a case (14) fixed to the ceiling of the aircraft cabin segment as well as a drawer (16) moveable between a closed position in which the drawer (16) is accommodated in the case (14) and an open position in which the drawer (16) projects from the case (14), the case (14) and the drawer (16) having walls disposed such that objects disposed in the drawer are inaccessible from outside the luggage locker (12) when the drawer (16) is in closed position and accessible by an opening (24) when the drawer is in open position.

8. An aircraft cabin segment according to claim 7, **characterized in that** the drawer (16) passes from its open position to its closed position by a substantially vertical translational movement.

9. An aircraft cabin, **characterized in that** it comprises at least one segment according to one of claims 1 to 8.

10. An aircraft, **characterized in that** it comprises at least one cabin segment according to one of claims 1 to 8.

## Patentansprüche

1. Flugzeugkabinenabschnitt, umfassend:
- mindestens einen sich in Längsrichtung erstreckenden Gang (8),
- Sitze, die in Reihen quer bezüglich des Längsgangs (8) angeordnet sind,
- mindestens eine Einheit von in einer Linie liegenden und in der Höhe angeordneten Gepäckfächern (12),
**dadurch gekennzeichnet, dass** die Gepäckfächer (12) in einer Querrichtung in einer Reihe liegen und oberhalb der Sitze angeordnet sind und dass zwischen zwei Reihen von Gepäckfächern (12) Lüftungsöffnungen angeordnet sind.

2. Flugzeugkabinenabschnitt nach Anspruch 1, **dadurch gekennzeichnet, dass** er Luftleitungen (28, 30) umfasst, die sich in Längsrichtung über den Gepäckfächern erstrecken, und dass Lüftungsöffnungen im Wesentlichen in gleichen Abständen von den beiden Reihen von Gepäckfächern angeordnet sind, zwischen denen sie sich befinden.

3. Flugzeugkabinenabschnitt nach einem der Abschnitte 1 oder 2, **dadurch gekennzeichnet, dass** die Gepäckfächer (12) so verkleidet sind, dass eventuelle scharfe Querkanten infolge des Vorhandenseins der Gepäckfächer (12) ausgeschlossen werden.

4. Flugzeugkabinenabschnitt nach einem der Ansprüche 1 bis 3, **dadurch gekennzeichnet, dass** die Gepäckfächer (12) oberhalb der Rückenlehnen (4) der Sitze angeordnet sind.

5. Flugzeugkabinenabschnitt nach einem der Ansprüche 1 bis 4, **dadurch gekennzeichnet, dass** die Reihe von Gepäckfächern (12) über einem Längsgang (8) unterbrochen ist.

6. Flugzeugkabinenabschnitt nach einem der Ansprüche 1 bis 5, **dadurch gekennzeichnet, dass** jeder Sitz eine Sitzfläche und eine Rückenlehne (4) umfasst und dass die Sitze von zwei aufeinander folgenden Reihen abwechselnd einander zugewandt oder Rücken an Rücken angeordnet sind.

7. Flugzeugkabinenabschnitt nach einem der Ansprüche 1 bis 6, **dadurch gekennzeichnet, dass** jedes Gepäckfach (12) einen Kasten (14), der an der Decke des Flugzeugkabinenabschnitts befestigt ist, sowie einen Einschub (16) umfasst, der zwischen einer geschlossenen Stellung, in der der Einschub (16) in dem Kasten (14) untergebracht ist, und einer offenen Stellung beweglich ist, in der der Einschub (16) aus dem Kasten (14) hervorsteht, wobei der Kasten (14) und der Einschub (16) Wände aufweisen, die so angeordnet sind, dass in dem Einschub angeordnete Gegenstände von außerhalb des Gepäckfachs (12) unzugänglich sind, wenn der Einschub (16) in der geschlossenen Stellung ist, und über eine Öffnung (24) zugänglich sind, wenn der Einschub (16) in geöffneter Stellung ist.

8. Flugzeugkabinenabschnitt nach Anspruch 7, **dadurch gekennzeichnet, dass** der Einschub (16) durch eine im Wesentlichen vertikale Translationsbewegung von seiner offenen Stellung in seine geschlossene Stellung übergeht.

9. Flugzeugkabine, **dadurch gekennzeichnet, dass** sie mindestens einen Abschnitt nach einem der Ansprüche 1 bis 8 umfasst.

10. Flugzeug, **dadurch gekennzeichnet, dass** es mindestens einen Kabinenabschnitt nach einem der Ansprüche 1 bis 8 umfasst.
